# EUROPÄISCHE PATENTANMELDUNG

(11) **EP 1 371 437 A1**
(43) Veröffentlichungstag der Anmeldung: **17.12.2003**
(21) Anmeldenummer: 03006327.5
(22) Anmeldetag: 20.03.2003
(51) Int. Cl.: B23C 5/10, B23C 5/14

(54) **Fräswerkzeug für Goldschmiede und Fasser**

(30) Priorität: 15.06.2002 DE 20209354 U
(71) Anmelder: Busch & Co.KG, 51766 Engelskirchen (DE)
(72) Erfinder: Busch, Gert, 51766 Engelskirchen (DE)
(74) Vertreter: Patentanwälte Maxton & Langmaack

(57) **Zusammenfassung**

Die Erfindung betrifft ein Fräswerkzeug zum Bearbeiten von Enden stiftförmiger Werkstücke aus Metall, insbesondere aus Edelmetall, mit einem Spannschaft (1) und mit einem Schneidkopf (2), der an seiner Stirnseite (3) eine axial ausgerichtete, stirnseitig offene napfförmige Vertiefung (4) aufweist, die auf ihrer Innenfläche mit mehreren Schneiden (5) versehen ist, deren Schneidkanten (6) radial von außen nach innen gerichtet sind und in einem auf der Drehachse (7) liegenden Scheitelpunkt (8) zusammenlaufen und die in ihrem Verlauf so geformt sind, daß bei Rotation die am Werkstück herzustellende Kontur entsteht, und mit wenigstens einem, die Vertiefung (4) im Schneidkopf (2) durchsetzenden und in Richtung der Drehachse (7) ausgerichteten Schlitz (10, 12).

## Beschreibung

Bei der Fertigung eines mit Edelsteinen versehenen Schmuckstücks ist es erforderlich, die Edelsteine jeweils mit einer Fassung zuverlässig und dauerhaft mit den übrigen Teilen des Schmuckstücks zu verbinden. Eine der häufigsten Fassungsarten ist die sogenannte Krappenfassung. Diese besteht im wesentlichen aus mehreren entsprechend der Umfangskontur des zu fassenden Edelsteins mit dem übrigen Teil des zu fertigenden Schmuckstücks verbundenen kurzen Stiften, deren freie Enden nach dem Einlegen des Edelsteins umgebogen werden und so den Edelstein formschlüssig fassen.

Zur Fertigstellung einer derartigen Krappenfassung ist es erforderlich, die freien Enden der Stifte bzw. Stotzen gratfrei abzurunden. Zu diesem Zweck werden maschinell angetriebene, rotierende, von Hand geführte Fräswerkzeuge eingesetzt. Diese Fräswerkzeuge weisen einen Spannschaft und einen Schneidkopf auf, der eine becherförmige Ausnehmung hat, die auf ihrer Innenfläche mit mehreren Schneiden versehen ist. Es werden Fräswerkzeuge mit unterschiedlichen Abmessung mit Innendurchmessern der Ausnehmung zwischen 0,6 mm und 8 mm angeboten.

Diese kleinen Abmessungen des Schneidkopfes lassen, bedingt durch die Lage der Schneiden auf der Innenfläche des becherförmigen Ausnehmung praktisch keine Abfuhr der anfallenden Späne zu. Dies hat zum einen eine verminderte Abtragsleistung zur Folge. Zum anderen müssen zur Wiederherstellung der Funktionsfähigkeit des Fräswerkzeugs in regelmäßigen Abständen die in der Ausnehmung zwischen den Schneiden festsitzenden Späne entfernt werden. Hierzu muß der Arbeitsgang unterbrochen werden, so daß eine Bearbeitung in einem Zuge oftmals nicht möglich ist. Außerdem können an den Schneiden festsitzende Späne zu Riefen oder dergl. führen; das ist nachteilig, da für die bearbeiteten abgerundeten freien Enden der Stotzen eine in der Regel glatte Oberfläche erwünscht ist. Ein derartiges Fräswerkzeug ist beispielsweise aus DE-83 21 302 U bekannt.

Aus DE 101 04 580 A ist für diesen Einsatzzweck ein Fräswerkzeug bekannt, das einen Schneidkopf aufweist, der eine durch zwei stirnseitige Bohrungen gebildete Ausnehmung aufweist. Die Achsen der beiden Bohrungen sind gegenüber der Drehachse des Schneidkopfes seitlich versetzt, so daß an anderer Stelle, an der die beiden Bohrungen ineinander übergehen, an der Wand der Ausnehmung zwei gegenüberliegende, in einer durch die Drehachse definierten Ebene verlaufende, in die Ausnehmung vorspringende Kanten vorhanden sind. In diesem Bereich der Wandung ist der Schneidkopf mit zwei achsiäl - radial ausgerichteten, bezogen auf die Drehachse ebenfalls gegeneinander versetzten Schlitzen versehen, die so geführt sind, daß jeweils eine Seitenfläche eines Schlitzes durch eine der vorspringenden Kanten begrenzt wird und so jede Kante eine schneidende Kante bilden soll. Diese Kante ist jedoch geometrisch wenig ausgeprägt, so daß bei der Bearbeitung das zu entfernende Material eher abgequetscht denn abgeschnitten wird. Außerdem führt die aus zwei versetzten Bohrungen gebildete Ausnehmung zu einem unruhigen Lauf des Fräswerkzeugs, so daß sogenannte Rattermarken am Werkstück nicht zu vermeiden sind.

Der Erfindung liegt die Aufgabe zugrunde, ein Fräswerkzeug zu schaffen, daß diese Nachteile vermeidet.

Zum Bearbeiten von Enden stiftförmiger Werkstücke aus Metall, insbesondere aus Edelmetall, wird diese Aufgabe gelöst durch ein Fräswerkzeug mit einem Spannschaft und mit einem Schneidkopf, der an seiner Stirnseite eine axial ausgerichtet stirnseitig offene, napfförmige Vertiefung aufweist, die auf ihrer Innenfläche mit mehreren Schneiden versehen ist, deren Schneidkanten radial von außen nach innen gerichtet sind und in einem auf der Drehachse liegenden Scheitelpunkt zusammenlaufen und die in ihrem Verlauf so geformt sind, daß bei Rotation die am Werkstück herzustellende Kontur entsteht, und mit wenigstens einem die napfförmige Vertiefung im Schneidknopf durchsetzenden und in Richtung der Drehachse ausgerichteten Schlitz. Der Vorteil eines derart ausgebildeten Fräswerkzeugs besteht darin, daß es auch bei hohen Drehzahlen von beispielsweise über 10.000 Umdrehungen pro Minute ruhig umläuft und die Schneiden das Material ohne Rattermarken abtragen. Die bei der Bearbeitung anfallenden Späne fließen seitlich durch den Schlitz ab und können sich nicht an den Schneiden festsetzen. Somit ergibt sich eine gute Abtragsleistung und eine hohe Oberflächengüte, wobei jeweils der zu bearbeitende Stift oder Stotzen ohne Unterbrechung fertig bearbeitet werden kann. Außerdem ist eine höhere Standzeit für das Fräswerkzeug gegeben. Die Endform des Stift- oder Stotzenendes ergibt sich aus der Kontur der Schneidkanten in der Vertiefung. Der Schlitz weist eine Breite von etwa 0,1 bis 0,3 mm auf.

In besonders vorteilhafter Ausgestaltung ist vorgesehen, daß der Schlitz den Schneidkopf in Richtung der Drehachse verlaufend so durchsetzt, daß der Scheitelpunkt der Schneiden oberhalb des Schlitzgrundes liegt. Diese Ausgestaltung hat den Vorteil, daß der entsprechende Scheitelpunkt des zu bearbeitenden Werkstücks freiliegt, so daß durch eine geringe Pendelbewegung bei der Bearbeitung auch der Scheitelpunkt des Werkstücks mit den Schneidkanten in Kontakt kommen kann und entsprechend Material in Form von feinen Spänen abgetragen wird, die dann über den Schlitzgrund durch den Schlitz seitlich nach außen abfließen können.

In Ausgestaltung der Erfindung ist vorgesehen, daß wenigstens zwei sich auf der Drehachse kreuzende Schlitze vorgesehen sind.

In einer anderen Ausgestaltung der Erfindung ist vorgesehen, daß ein auf der Drehachse verlaufender erster Schlitz vorgesehen ist und daß wenigstens ein weiterer, den ersten Schlitz mit Abstand zur Drehachse kreuzender weiterer Schlitz vorgesehen ist.

Weitere Merkmale der Erfindung sind den Ansprüchen sowie den Zeichnungen und der Beschreibung von Ausführungsbeispielen zu entnehmen.

Die Erfindung wird anhand schematischer Zeichnungen in starker Vergrößerung näher erläutert. Es zeigen:
- Fig. 1: eine Seitenansicht eines Fräswerkzeugs,
- Fig. 2: einen Seitenansicht eines Schneidkopfes in größerem Maßstab,
- Fig. 3: eine Aufsicht auf den Schneidkopf des Fräswerkzeugs gemäß Fig. 2,
- Fig. 4: eine schematische Aufsicht auf eine Ausführungsform mit einem auf der Drehachse verlaufenden Schlitz,
- Fig. 5: eine schematische Aufsicht auf einen Schneidkopf mit zwei sich auf der Drehachse kreuzenden Schlitzen,
- Fig. 6: eine Aufsicht auf einen Schneidkopf mit drei sich auf der Drehachse kreuzenden Schlitzen,
- Fig. 7: eine abgewandelte Aufsicht der Ausführungsform gemäß den Fig. 2, 3 mit zwei Querschlitzen,
- Fig. 8: eine Abwandlung der Ausführungsform gemäß Fig. 2,
- Fig. 9: eine Abwandlung der Ausführungsform gemäß Fig. 5.

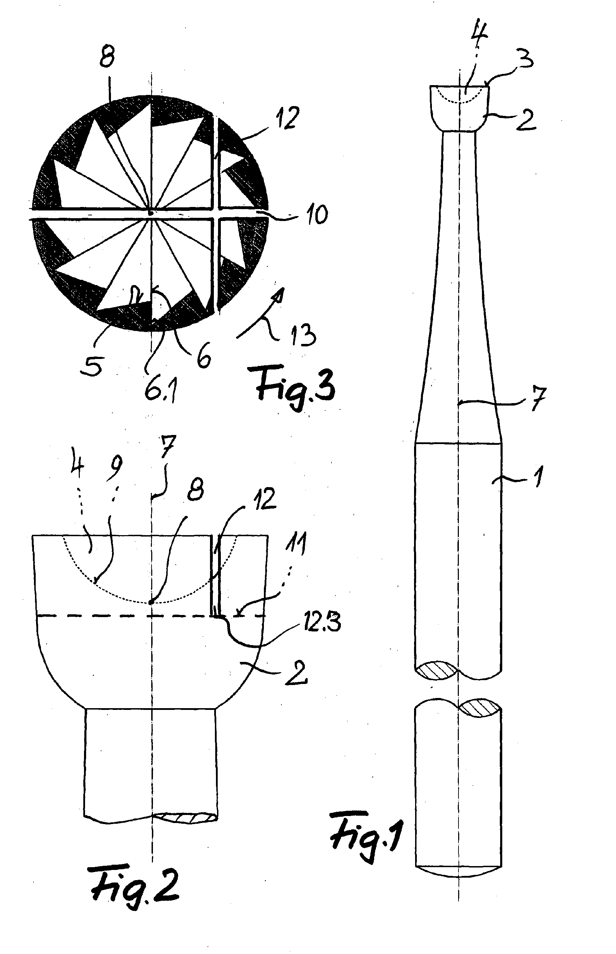

Das in Fig. 1 dargestellte Fräswerkzeug weist einen Spannschaft 1 auf, der mit einem Schneidkopf 2 verbunden ist. Der Schneidkopf 2 ist an seiner Stirnseite 3 mit einer axial ausgerichteten, stirnseitig offenen, napfförmigen Vertiefung 4 versehen, die, wie die Aufsicht gemäß Fig. 3 zeigt, mit mehreren im Querschnitt sägezahnartig ausgebildeten Schneiden 5 versehen ist, deren Schneidkanten 6 radial von außen nach innen verlaufen und in einem auf der Drehachse 7 liegenden, gedachten Scheitelpunkt 8 zusammenlaufen. Der räumliche Verlauf der Schneidkanten 6 entspricht der herzustellenden Kontur am zu bearbeitenden Werkstück und ist bei dem hier dargestellten Ausführungsbeispiel als Teilkreis ausgebildet, so daß sich bei Rotation des Werkzeugs in der Abfolge der Schneidkanten eine Kugelkalotte ergibt, deren Scheitelhöhe geringer ist als eine entsprechende Halbkugel. Die Kalotte ist durch die punktierte Linie 9 in Fig. 2 gekennzeichnet.

Der Schneidkopf 2 mit seiner napfförmigen Vertiefung 4 ist mit einem ersten Schlitz 10 versehen, der auf der Drehachse 7 verlaufend den Schneidkopf durchsetzt, wobei der gedachte Scheitelpunkt 8 oberhalb des Schlitzgrundes 11 liegt.

Bei dem in Fig. 2 und 3 dargestellten Ausführungsbeispiel ist zusätzlich zu dem ersten Schlitz 10 ein quer und mit Abstand zur Drehachse verlaufender weiterer Schlitz 12 vorgesehen, dessen Schlitzgrund auf gleicher Höhe wie der Schlitzgrund 11 des ersten Schlitzes 10 liegt. Die Tiefe des weiteren Schlitzes 12 kann aber auch nur so weit geführt sein, daß der Schlitzgrund 12.3 in einem Bereich unterhalb der von ihm nur teilweise durchsetzten Schneiden verläuft, wie dies in Fig. 8 gezeigt ist.

Die Schlitze 10 und 12 sind seitlich offen, so daß das von den Schneiden abgetragene Material bis auf den Schlitzgrund 11 gelangen und nach außen über die seitlichen Öffnungen ausgetragen werden kann.

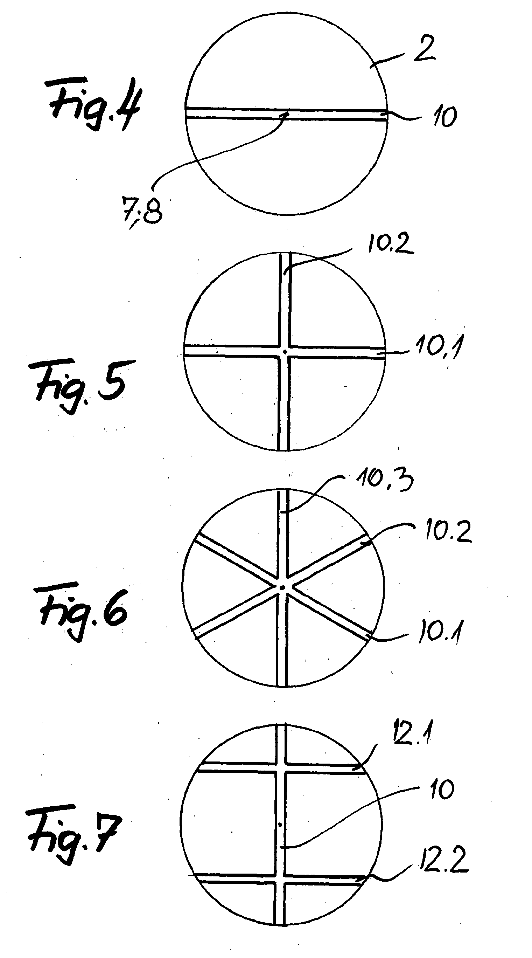

In den Fig. 4 bis 7 sind in einer rein schematischen Aufsicht auf den Schneidkopf 2 unterschiedliche Anordnungen von den Schneidkopf durchsetzenden Schlitzen dargestellt.

Fig. 4 zeigt eine Abwandlung der Ausführungsform gemäß Fig. 2, 3, bei der lediglich ein in Richtung der Drehachse ausgerichteter Schlitz 10 vorgesehen ist.

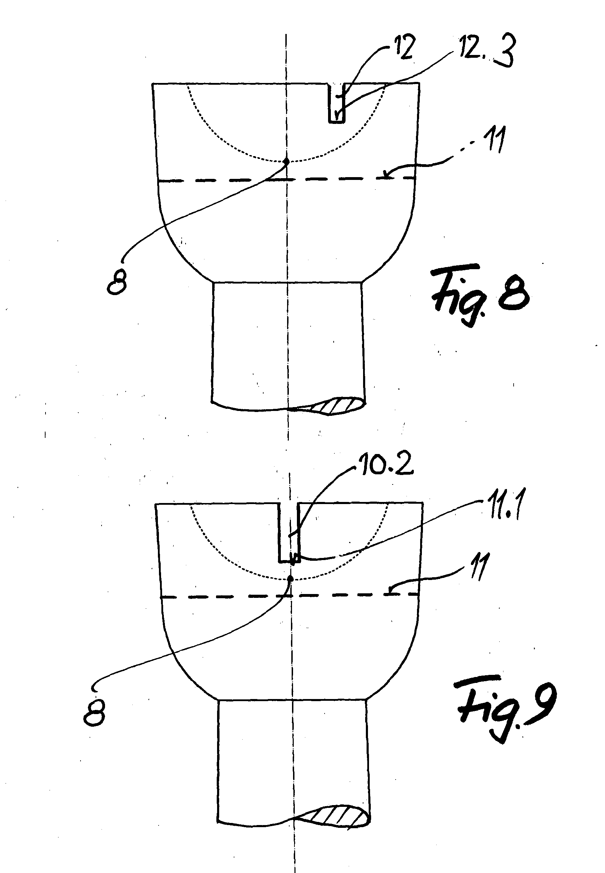

Fig. 5 zeigt eine Abwandlung mit zwei sich unter 90° auf der Drehachse kreuzenden Schlitzen 10.1 und 10.2. Diese können die gleiche Schlitztiefe aufweisen oder aber - wie Fig. 8 zeigt - so gestaltet sein, daß der Schlitzgrund 11.1 des Schlitzes 10.1 oberhalb des Scfieitelpunktes 8 liegt, wie auch aus Fig. 2 ersichtlich, und der Schlitzgrund 11.1 des Schlitzes 10.2 unterhalb des Scheitelpunktes 8 liegt. Bei der Ausführungsform gemäß Fig. 6 sind entsprechend wenigstens ein Schlitz mit seinem Schlitzgrund oberhalb des Scheitelpunktes 8 und mit wenigstens einem Schlitz mit seinem Schlitzgrund unterhalb des Scheitelpunktes 8 geführt.

Fig. 6 zeigt eine Abwandlung der Ausführungsform gemäß Fig. 5 mit drei sich auf der Drehachse kreuzenden Schlitzen 10.1, 10.2 und 10.3.

Fig. 7 zeigt eine Abwandlung der Ausführungsform gemäß Fig. 2, 3, bei der der erste Schlitz 10 von zwei weiteren Schlitzen 12.1 und 12.2 unter 90° und mit Abstand zur Drehachse 7 gekreuzt ist.

Die Fig. 3 bis 7 lassen erkennen, daß die Schlitze in den unterschiedlichsten Zuordnungen zueinander vorgesehen werden können. Da die Tiefe der Schneiden 5, d. h. der Abstand der Schneidkante 6 zum Schneidengrund 6.1 im Bereich des Scheitelpunktes 8 gegen Null geht, ergibt sich die beste Wirkung des erfindungsgemäßen Fräswerkzeugs dann, wenn wenigstens einer der Schlitze, von der Stirnseite her gesehen, mit seinem Schlitzgrund 11 unterhalb des Scheitelpunktes 8 der Schneidkanten 6 liegt, so daß ein einwandfreier Spanabfluß gerade in diesem kritischen Bereich gewährleistet ist. Die Drehrichtung des Werkzeugs ist in Fig. 3 durch den Pfeil 13 in zweckmäßiger Weise angegeben. Der Außendurchmesser des Schneidkopfes 2 ist nur geringfügig größer als der sich über dem Schneidengrund 6.1 ergebende größte Innendurchmesser, so daß auch an eng nebeneinander stehenden Fassungen noch eine Bearbeitung von Stotzen möglich ist, ohne benachbarte Stotzen zu berühren. Der Außendurchmesser kann im Extremfall soweit reduziert werden, daß die Enden der Schneidgründe 6.1 in einen nach außen offenen schmalen Spalt auslaufen.

Die Schlitze 10 bzw. 12 eines Schneidkopfes können eine unterschiedliche Breite aufweisen.

Die vorstehend verwendete Angabe, daß der Scheitelpunkt der Schneidkanten oberhalb des Schlitzgrundes liegen soll, bedeutet, daß der Scheitelpunkt in Bezug auf den Schlitzgrund auf der dem Spannschaft abgekehrten Seite liegt. Dementsprechend bedeutet die Angabe, daß der Scheitelpunkt der Schneidkanten unterhalb des Schlitzgrundes liegt, daß der Scheitelpunkt auf der dem Spannschaft zugekehrten Seite bezogen auf den Schlitzgrund liegt.

Aus herstellungstechnischen Gründen ist das Fräswerkzeug aus Werkzeugstahl in der Güte WS oder HSS hergestellt.

## Patentansprüche

1. Fräswerkzeug zum Bearbeiten von Enden stiftförmiger Werkstücke aus Metall, insbesondere aus Edelmetall, mit einem Spannschaft (1) und mit einem Schneidkopf (2), der an seiner Stirnseite (3) eine axial ausgerichtete, stirnseitig offene napfförmige Vertiefung (4) aufweist, die auf ihrer Innenfläche mit mehreren Schneiden (5) versehen ist, deren Schneidkanten (6) radial von außen nach innen gerichtet sind und in einem auf der Drehachse (7) liegenden Scheitelpunkt (8) zusammenlaufen und die in ihrem Verlauf so geformt sind, daß bei Rotation die am Werkstück herzustellende Kontur entsteht, und mit wenigstens einem, die Vertiefung (4) im Schneidkopf (2) durchsetzenden und in Richtung der Drehachse (7) ausgerichteten Schlitz (10, 12).

2. Fräswerkzeug nach Anspruch 1, **dadurch gekennzeichnet, daß** der Schlitz (10) den Schneidkopf (2) in Richtung der Drehachse (7) verlaufend so durchsetzt, daß der Scheitelpunkt (8) der Schneidkanten (6) oberhalb des Schlitzgrundes (11) liegt.

3. Fräswerkzeug nach Anspruch 1 oder 2, **dadurch gekennzeichnet, daß** wenigstens zwei sich auf der Drehachse (7) kreuzende Schlitze (10) vorgesehen sind.

4. Fräswerkzeug nach Anspruch 3, **dadurch gekennzeichnet, daß** der Schlitzgrund (11.1) wenigstens eines weiteren Schlitzes (10.2) oberhalb des Scheitelpunktes (8) liegt.

5. Fräswerkzeug nach Anspruch 1 oder 2, **dadurch gekennzeichnet, daß** ein auf der Drehachse (7) verlaufender erster Schlitz (10) vorgesehen ist und daß wenigstens ein den ersten Schlitz (10) mit Abstand zur Drehachse (7) kreuzender weiterer Schlitz (12) vorgesehen ist.

6. Fräswerkzeug nach einem der Ansprüche 1 bis 5 **dadurch gekennzeichnet, daß** der weitere Schlitz (12) so ausgebildet ist, daß sein Schlitzgrund in axialer Richtung tiefer durch die napfförmige Vertiefung (4) verläuft als die von ihm durchsetzten Schneiden.

7. Fräswerkzeug nach einem der Ansprüche 1 bis 6, **dadurch gekennzeichnet, daß** der weitere Schlitz (12) so ausgebildet ist, daß sein Schlitzgrund (12.1) einen Teil der Schneiden nicht durchsetzt.

8. Fräswerkzeug nach einem der Ansprüche 1 bis 7, **dadurch gekennzeichnet, daß** die Schneiden (5) in ihrem Querschnitt sägezahnartig gestaltet sind.

9. Fräswerkzeug nach einem der Ansprüche 1 bis 7, **dadurch gekennzeichnet, daß** die Schlitze (10; 12) unterschiedlich breit sind.
